# EUROPÄISCHE PATENTSCHRIFT

(11) **EP 1 417 050 B1**
(45) Veröffentlichungstag und Bekanntmachung des Hinweises auf die Patenterteilung: **23.02.2005**
(21) Anmeldenummer: 02759864.8
(22) Anmeldetag: 09.08.2002
(51) Int. Cl.: B21D 5/02, F16P 3/14

(54) **FERTIGUNGSEINRICHTUNG, INSBESONDERE ABKANTPRESSE, UND VERFAHREN ZUM BETRIEB EINER FERTIGUNGSEINRICHTUNG**
PRODUCTION DEVICE, IN PARTICULAR A FOLDING PRESS AND A METHOD FOR OPERATING A PRODUCTION DEVICE
DISPOSITIF DE FABRICATION, NOTAMMENT PRESSE PLIEUSE, ET PROCEDE POUR L'EXPLOITATION D'UN DISPOSITIF DE FABRICATION

(30) Priorität: 17.08.2001 AT 20011290
(43) Veröffentlichungstag der Anmeldung: 12.05.2004
(73) Patentinhaber: Trumpf Maschinen Austria GmbH & CO. KG., 4061 Pasching (AT)
(72) Erfinder: SPERRER, Gerhard, A-4552 Wartberg/Krems (AT)
(74) Vertreter: Secklehner, Günter, Dr.
(86) Internationale Anmeldenummer: PCT/AT2002/000240
(87) Internationale Veröffentlichungsnummer: WO 2003/015951

(56) Entgegenhaltungen:
- EP-A- 0 035 522
- EP-A- 0 166 351
- WO-A-01/14826
- DE-A- 4 312 565
- DE-A- 10 000 287
- DE-A- 10 026 305
- DE-A- 10 026 710
- DE-A- 19 619 688
- US-A- 3 710 050
- US-A- 5 081 406
- US-A- 6 163 374

## Beschreibung

Die Erfindung betrifft eine Fertigungseinrichtung, wie sie im Oberbegriff des Anspruches 1 beschrieben ist.

An Fertigungseinrichtungen wie Abkantpressen für die Umformung von blechförmigen Werkteilen sind verschiedene Sicherheitseinrichtungen zur Vermeidung von Unfällen, wie sie bei unsachgemäßer Maschinenbedienung auftreten können, bekannt, durch die der Arbeitsbereich in unmittelbarer Nähe und zwischen der zur Durchführung eines Arbeitsvorganges relativ zueinander bewegten Umformwerkzeugen gesichert ist um einen Not-Stop auszuführen, wenn in diesen gesicherten Arbeitsbereich Körperteile einer Bedienungsperson vorhanden sind. Eine derartige aus dem Stand der Technik bekannte Einrichtung besteht z.B. aus einem "Lichtvorhang", bei dem ein Strahlensender Lichtstrahlen zu einem diesem gegenüberliegenden Strahlenempfänger aussendet und bei einer Unterbrechung des Lichtstrahles die Maschine still gesetzt wird. Vielfach sind derartige Maschinen darüber hinaus mit einer "Zweihand-Steuerung" ausgerüstet, die es zum Einleiten des Umformvorganges erforderlich macht, daß die Bedienungsperson mit beiden Händen unabhängige, voneinander getrennte Schalter oder Steucrtasten gleichzeitig betätigen muß, wodurch sicher gestellt ist, daß die Hände verläßlich außerhalb des Arbeitsbereiches sind. Eine derartige Einrichtung bietet jedoch keinerlei Schutz für eine nicht unmittelbar mit der Bedienung der Maschine beauftragte anwesende Person bzw. auch gegenüber Manipulationen an der Sicherheitseinrichtung.

Aus der DE 100 00 287 A1 ist eine Fertigungseinrichtung, insbesondere Abkantpresse für die Umformung von Werkteilen aus Blech zwischen zwei mit Werkzeugen bestückten, relativ zueinander mittels einer Antriebsvorrichtung, verstellbaren Pressenbalken bekannt. Eine Steuereinrichtung umfasst eine Erfassungsvorrichtung und zumindest ein Erfassungsmittel, welches mit der Erfassungsvorrichtung zur Daten- und/oder Signalübertragung kommunikationsverbunden ist und in der ein Analyse- Steuermodul angeordnet ist und einen Datenspeicher aufweist. Das Erfassungsmittel der Erfassungsvorrichtung bildet eine Kamera, mittels der das unmittelbare Arbeitsumfeld des beweglichen Pressenbalkens überwacht wird und Bildsignale dahingehend ausgewertet werden, dass die Fertigungseinrichtung außer Betrieb gesetzt wird, sobald vorgegebene Bildmuster einen Eingriff der Bedienungsperson in den unmittelbaren Gefahrenbereich zu erkennen geben.

Aus dem Dokument DE 196 19 688 A1 ist ein Verfahren zur Videoüberwachung der Bedienungsräume von Maschinen bekannt, wobei mittels einer Videokamera der zu überwachende Bedienungsraum optisch erfasst und ein elektronisch verarbeitbares Bild des freien Bedienungsraumes erzeugt wird, das von der Kamera einem Bildprozessor zugeführt und in diesem abgespeichert wird. Vor jeder Inbetriebnahme der Presse wird erneut von der Videokamera ein Bild des Bedienungsraumes aufgenommen und das erzeugte Bild im Bildprozessor mit dem abgespeicherten Bild verglichen. Ein Betrieb der Presse kann nur dann erfolgen, wenn das neue Bild mit dem abgespeicherten Bild identisch ist.

Weiters ist aus dem Dokument US 5,081,406 A eine Überwachungs- und Steuereinrichtung für den Betrieb einer Maschine mit kraftbetätigten Werkzeugen, z.B. einem Sägeblatt, und mit einer Einrichtung zum Schutz einer Bedienungsperson bekannt. Eine Steuer- und Überwachungseinrichtung weist eine Erfassungseinrichtung auf, mittels der kapazitive Änderungen im Bereich des bewegten Werkzeuges bedingt durch die Annäherung der Bedienungsperson erkannt und in einem Steuerkreis ausgewertet werden. Bei einer, die Bedienungsperson gefährdenden Annäherung an das Werkzeug und dadurch bedingten Änderung von Messwerten wird ein Not-Stopp des bewegten Werkzeuges bewirkt.

Aufgabe der Erfindung ist es, eine Fertigungseinrichtung und ein Verfahren zum Betrieb der Fertigungseinrichtung zu schaffen, um größtmögliche Sicherheit für die Bedienungskraft bei einer hohen Durchsatzleistung, d.h. kurzen Arbeitstakten, zu erreichen und die Manipulationsmöglichkeiten an den Sicherheitseinrichtungen zu unterbinden.

Diese Aufgabe der Erfindung wird durch die kennzeichnenden Merkmale des Anspruches 1 gelöst. Der überraschende Vorteil dabei ist, daß beim Vorliegen von ein Gefahrenpotential bildenden Abweichungen von vorgegebenen und als Sollwerte festgelegten Informationen zum Betriebszustand der Fertigungseinrichtung während der Bedienung und des Betriebsablaufes bedienungsunabhängig sofortige Maßnahmen zur Stillsetzung der Fertigungseinrichtung innerhalb gesetzter Toleranzwerte ermöglicht und durch den damit erreichten höheren Sicherheitsstandard kürzere Fertigungsabläufe und damit eine höhere Wirtschaftlichkeit erreicht wird.

Möglich ist aber auch eine Ausbildung nach Anspruch 2, wodurch eine Vielzahl von sicherheitsrelevanten Informationen in die Sicherheitssteuerung einbezogen werden können.

Vorteilhaft ist dabei eine Ausführung nach Anspruch 3, wodurch alle Informationen für den Zugriff des Analyse-Steuermoduls hinterlegt sind.

Eine weitere vorteilhafte Ausbildung beschreiben die Ansprüche 4 und 5, womit der unmittelbare Werkzeugbereich bei der Bewegung des Pressenbalkens bis an den Sicherheitsabstand, bei dem die Biegewerkzeuge im Bereich von 6 mm bis 8 mm voneinander distanziert sind, überwacht wird und bei Auftreffen auf ein Hindernis, z.B. einen Körperteil, vor dem Erreichen des Sicherheitsabstandes der Antrieb der Fertigungseinrichtung stillgesetzt und bevorzugt eine Umkehrbewegung des angetriebenen Pressenbalkens durchgeführt wird.

Vorteilhaft sind dabei Ausbildungen nach den Ansprüchen 6 bis 10, wobei eine Reihe technischer Möglichkeiten für eine Bewegungsumkehr der Werkzeugaufnahmevorrichtung oder der Biegewerkzeuge gegenüber dem Pressenbalken gegeben sind.

Von Vorteil sind aber auch Ausbildungen nach den Ansprüchen 11 bis 13, wodurch einerseits eine rasch reagierende Rückzugsbewegung infolge der durch die Teilung geringen Masse im Biegewerkzeugbereich erreicht wird und ein nicht auszuschaltender Nachlaufweg des Pressenbalkens mit seiner hohen Masse ausgeglichen wird.

Zum besseren Verständnis der Erfindung wird diese gemäß den in den Figuren gezeigten Ausführungsbeispielen näher erläutert.

Es zeigen:
- Fig. 1: eine Fertigungseinrichtung mit der erfindungsgemäßen Sicherheitseinrichtung in vereinfachter, perspektivische Ansicht;
- Fig. 2: die erfindungsgemäße Fertigungseinrichtung mit Detaildarstellung der Sicherheitssteuereinrichtung in schematischer Darstellung;
- Fig. 3: eine weitere Ausbildung einer Sicherheitssteuereinrichtung in schematischer Darstellung;
- Fig. 4: eine andere Variante der Sicherheitssteuereinrichtung in schematischer Darstellung;
- Fig. 5: eine andere Variante der Sicherheitssteuereinrichtung in schematischer Darstellung;
- Fig. 6: eine andere Ausbildung der Sicherheitssteuereinrichtung in schematischer Darstellung;
- Fig. 7: eine andere Ausbildung der Fertigungsmaschine mit einer Sicherheitssteuereinrichtung in schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

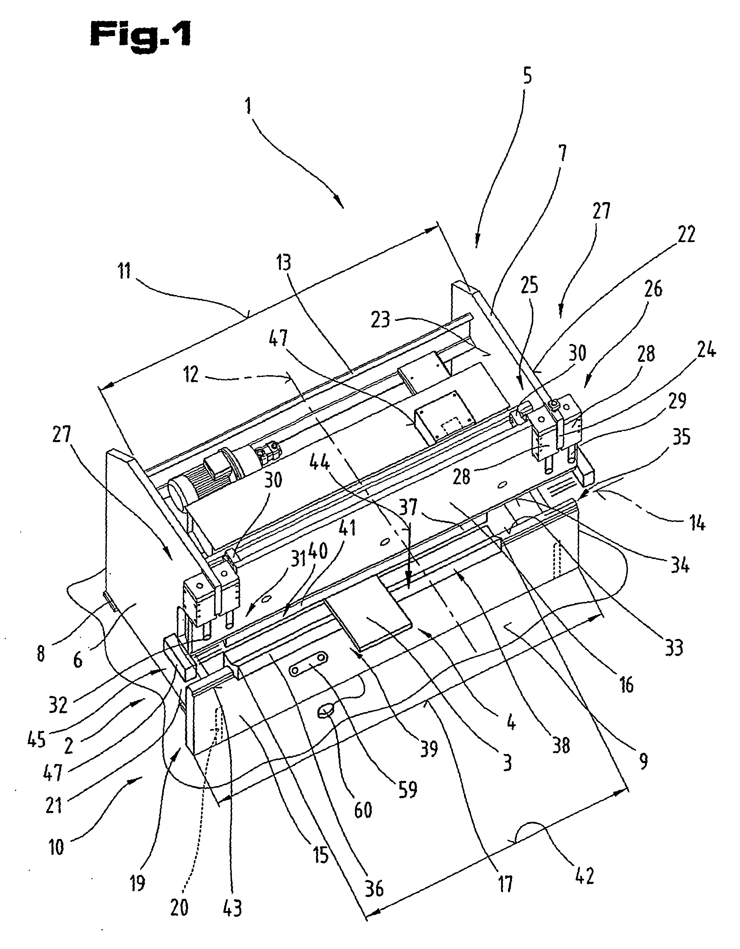

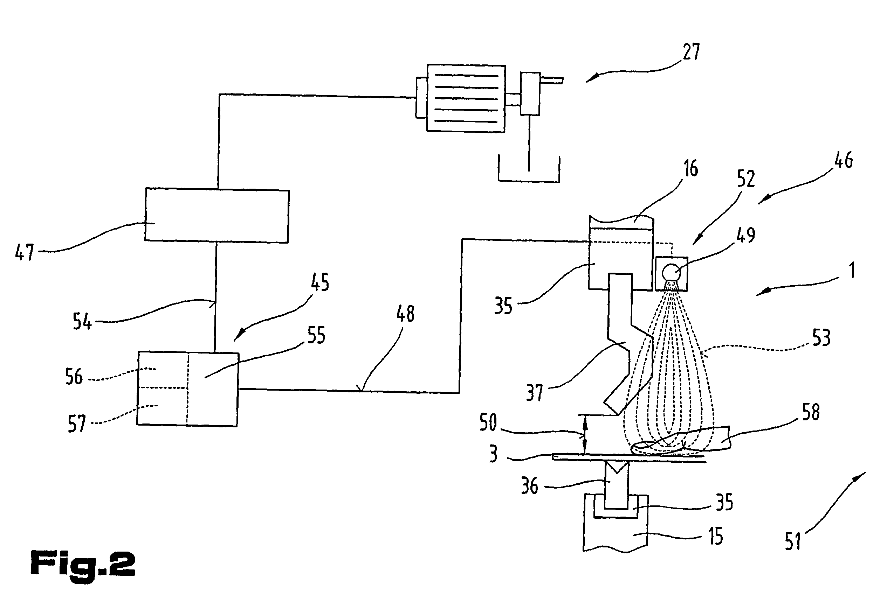

In den Fig. 1 und 2 ist eine Fertigungseinrichtung 1, insbesondere eine Abkantpresse 2, für das Umformen, insbesondere von Werkteilen 3, z.B. zu Gehäuseteilen 4, Profilen etc., gezeigt. Ferner werden diese Fertigungseinrichtungen 1 auch für die Herstellung langgestreckter Profile , z.B. Winkelprofile, U-Profile, Z-Profile etc. mit einem im allgemeinen sehr großen Längen/Querschnittsverhältnis verwendet.

Ein Maschinengestell 5 der Fertigungseinrichtung 1 besteht im wesentlichen aus zwei parallel und in Abstand zueinander angeordneten C-förmig gestalteten Ständer-Seitenwangen 6, 7, die direkt oder bei Bedarf, z.B. über Dämpfungselemente 8 auf einer Aufstandsfläche 9 abgestützt oder in einer weiteren Ausführungsform, wie beispielhaft gezeigt, auf einer gemeinsamen Bodenplatte 10 befestigt, insbesondere mit dieser verschweißt sind. Weiters sind die Ständer-Seitenwangen 6, 7 miteinander in einem Abstand 11 über zu einer Mittelachse 12 senkrecht verlaufende Wandteile 13 verbunden.

In bezug auf eine zu der Aufstandsfläche 9 parallel verlaufenden Arbeitsebene 14 weist die Fertigungseinrichtung 1 zwei einander gegenüberliegende Pressenbalken 15, 16 auf, die sich über eine Länge 17 erstrecken, die generell von der vorgesehenen Maschinengröße bzw. der vorgesehenen Arbeitslänge für das Biegen der Werkteile 3 festgelegt ist.

Der der Aufstandsfläche 9 zugewandte Pressenbalken 15 ist über eine Befestigungsanordnung 19 am Maschinengestell 5, bevorzugt direkt an Stirnflächen 20 von der Bodenplatte 10 zugeordneten Schenkeln 21 der C-förmigen Ständer-Seitenwangen 6, 7 befestigt, insbesondere mittels Schweißverbindung. An Seitenflächen 22, 23 von zu der Aufstandsfläche 9 beabstandeten Schenkeln 24 der C-förmigen Ständer-Seitenwangen 6, 7 sind durch ein Druckmedium beaufschlagbare Stellantriebe 25, 26 der Antriebsanordnung 27, gebildet aus doppelt wirkenden Hydraulikzylindern 28, angeordnet. Stellelemente 29, z.B. Kolbenstangen der Hydraulikzylinder 28, sind mit dem in Führungsanordnungen 30 des Maschinengestells 5 in einer zur Arbeitsebene 14 senkrecht verlaufenden Richtung verstellbar gelagerten Pressenbalken 16 über Gelenklager 31 und, z.B. Bolzen 32, antriebsverbunden. Der Pressenbalken 15 und der Pressenbalken 16 erstrecken sich über die Länge 17 in etwa symmetrisch und in senkrechter Richtung zur Mittelebene 12, wobei die Länge 17 geringfügig größer als der Abstand 11 ist.

Auf einander zugewandten und zur Arbeitsebene 14 parallel verlaufenden Stirnflächen 33, 34 weisen die Pressenbalken 15, 16 Werkzeugaufnahmevorrichtungen 35 zur Abstützung und lösbaren Befestigung von Biegewerkzeugen 36, 37 auf. Wie aus dem Stand der Technik bekannt, bilden diese Biegewerkzeuge 36, 37 im allgemeinen ein als Matrize 38 ausgebildetes Biegegesenk 39 und einen als Patrize 40 ausgebildeten Biegestempel 41 aus. Aus dem Stand der Technik ist es weiters bekannt, die Biegewerkzeuge 36, 37 in Sektionen zu unterteilen, wodurch sich eine leichte Variierbarkeit für eine Werkzeuglänge 42 ergibt, um diese den jeweiligen Erfordernissen anpassen zu können bzw. auch um die Umrüstung der Fertigungseinrichtung 1 oder den Austausch der Biegewerkzeuge 36, 37 einfacher vornehmen zu können.

Die Werkzeugaufnahmevorrichtungen 35 in den Pressenbalken 15, 16 sind einerseits zur lösbaren Befestigung der Biegewerkzeuge 36, 37 ausgebildet, andererseits bilden sie Stützflächen 43 zur Übertragung der Biegekräfte - gemäß Pfeil 44 - aus.

Wie weiters der Fig. 1 zu entnehmen, ist die Fertigungseinrichtung 1 mit einer Sicherheitssteuereinrichtung 45 versehen, die nunmehr in der Fig. 2 näher erläutert wird. Diese besteht im wesentlichen aus einer Erfassungsvorrichtung 46, die mit einer Steuereinrichtung 47 der Fertigungseinrichtung 1 leitungsverbunden ist und über eine Leitung 48 mit zumindest einem Erfassungsmittel 49 verbunden ist. Die Erfassungsvorrichtung 46 mit dem Erfassungsmittel 49 ist für eine Fremdobjekterkennung zur Überwachung des unmittelbaren Arbeitsbereiches zwischen den Biegewerkzeugen 36, 37 bzw. der in unmittelbaren Arbeitsbereich einschließenden Sicherheitszone ausgelegt, wobei auch der zu bearbeitende Werkteil 3 in die Fremdobjekterkennung einbezogen ist, der bei Unterschreiten eines Sicherheitsabstandes 50 zwischen den Biegewerkzeugen 36, 37 ohne Fremdberührung sein muß. Nach den derzeitigen Sicherheitsbestimmungen ist in einem Bereich, größer als der Sicherheitsabstand 50, die Annäherungsgeschwindigkeit gering, im Bereich kleiner dem Sicherheitsabstand 50, eine hohe Annäherungsgeschwindigkeit vorgesehen. Das Erfassungsmittel 49 ist im gezeigten Ausführungsbeispiel eine der Werkzeugaufnahmevorrichtung 35 für das Biegewerkzeug 37 in Richtung einer Bedienperson 51 vorgelagerte Sende- und Empfangseinrichtung 52 für Strahlen insbesondere im IR- oder UV- Bereich bzw. Wellen, insbesondere im UK- oder HF-Bereich, die sich über die Länge 17 des Pressenbalkens 16 erstreckt und ein Strahlen- oder Wellenfeld 53 in Richtung des Werkteils 3 ausbildet. Die Sicherheitssteuereinrichtung 45, die über eine Leitung 54 mit der Steuereinrichtung 47 der Fertigungseinrichtung 1 verbunden ist, weist ein Analyse-Steuermodul 55 mit einem Datenspeicher 56 und einem Schaltmittel 57 auf. Zur Verarbeitung des Werkteils 3, z.B. einem zu dem Gehäuseteil 4 umzuformenden Blech wird vor der Inbetriebnahmemöglichkeit der Fertigungseinrichtung 1 ein Soll-Datenmustersatz des Wellenfeldes bei, zum Verarbeitungsprozeß auf das Biegewerkzeug 36 aufgelegtem Werkteil 3, ermittelt und im Datenspeicher 56 erfaßt. Diese Erfassung erfolgt im Betriebszustand "Zweihand-Bedienung" womit sichergestellt ist, daß kein Fremdobjekt, z.B. kein Körperteil 58, in den gefährlichen Arbeitsbereich ragt. Nach Erfassung des Soll-Datenmustersatzes wird über das Schaltmittel 57 die Steuereinrichtung 47 für die Inbetriebnahme freigeschaltet, womit die Inbetriebnahme der Fertigungseinrichtung 1 wahlweise mit Zweihand-Schaltmittel 59 oder Fußschalter 60 erfolgen kann.

Soll nunmehr der Werkteil 3 der Umformung unterzogen werden und dazu ein Arbeitshub eingeleitet werden, wird während der Annäherung der Biegewerkzeuge 36, 37 das Strahlenoder Wellenfeld 53 aktiviert und ein Ist-Datenmustersatz ermittelt und im Analyse-Steuermodul 55 mit dem im Datenspeicher 56 hinterlegtem Soll-Datenmustersatz verglichen und bei Übereinstimmung die Annäherung der Biegewerkzeuge 36, 37 fortgesetzt und mit der Umformung des Werkteils 3 abgeschlossen werden.

Kommt es hingegen während der Annäherung der Biegewerkzeuge 36, 37 vor dem Erreichen des Sicherheitsabstandes 50 im Analyse-Steuermodul 55 zur Feststellung einer Abweichung zwischen dem Soll-Datenmustersatz und dem Ist-Datenmustersatz, wird im Schaltmittel 57 der Schaltzustand umgestellt und ein Steuersignal an die Steuereinrichtung 47 geleitet und der Annäherungsvorgang der Biegewerkzeuge 36, 37 gestoppt bzw. in seiner Bewegungsrichtung umgekehrt.

Eine derartige Sicherheitssteuereinrichtung 45 mit der Erfassungsvorrichtung 46 ist unabhängig von der Antriebsart der Fertigungseinrichtung 1, z.B. Elektroantrieb, Hydroantrieb, anwendbar und liegt die Reaktionszeit bei den nach dem heutigen Stand üblicherweise gefahrenen Geschwindigkeiten, zur Erzielung höchstmöglicher Sicherheit der Bedienperson 51 bzw. unbeteiligter, anwesender Personen, bei etwa 5 Millisekunden, um bei einer Druckbalkengeschwindigkeit von 200 mm pro Sekunde und einem zu berücksichtigenden Nachlaufweg höchste Sicherheit vor einer Quetschung des Körperteils 58 zu gewährleisten.

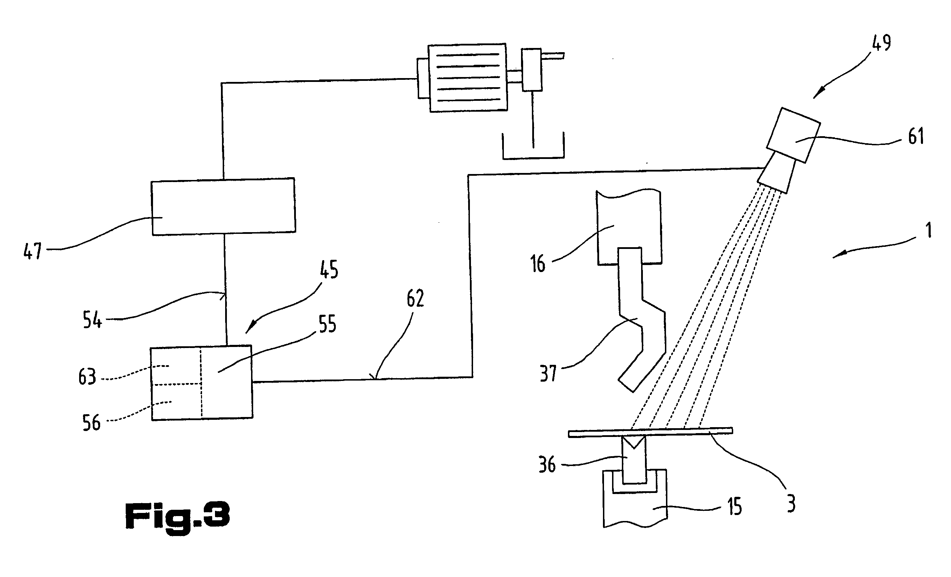

In der Fig. 3 ist eine andere Ausführung der Sicherheitssteuereinrichtung 45 für die Fertigungseinrichtung 1 gezeigt. Bei dieser Absicherung der Fertigungseinrichtung 1 ist als Erfassungsmittel 49 zumindest eine Kamera 61 zur Bilderfassung des unmittelbaren Arbeitsbereiches unmittelbar vor und zwischen den Biegewerkzeugen 36, 37. Über eine Leitung 62 ist die Kamera 61 mit einer Bildverarbeitungseinrichtung 63 verbunden, die mit dem Analyse-Steuermodul 55 und dem Datenspeicher 56 zusammenwirkt, die insgesamt die Sicherheitssteuereinrichtung 45 bilden, die über die Leitung 54 mit der Steuereinrichtung 47 der Fertigungseinrichtung 1 verbunden ist.

In einem Rüstvorgang der Fertigungseinrichtung 1 wird der umzuformende Werkteil 3 in Position auf das Biegewerkzeug 36 aufgelegt und die Situation mit der Kamera 61 als Bild erfaßt und in der Bildverarbeitungseinrichtung 63 als Bildinformation verarbeitet und als Soll-Datensatz im Datenspeicher 56 hinterlegt. Damit erfolgt eine Freigabe, um den Echtbetrieb aufnehmen zu können. In diesem Betriebsmodus wird nunmehr bei jedem Arbeitshub des beweglichen Pressenbalkens 16 der Arbeitsbereich auf eine Abweichung durch Ermittlung des Ist-Datensatzes und Vergleich mit dem Soll-Datensatz im Analyse-Steuermodul 55 überprüft und bei einer Abweichung die Fertigungseinrichtung 1, wie bereits vorhergehend beschrieben, stillgesetzt.

Damit ist also sichergestellt, daß bei jeder Abweichung von einmal in einem sogenannten Lernprozeß ermittelten Bildinformation, z.B. durch in den überwachten Arbeitsbereich ragenden Körperteil 58, z.B. Finger, die Bewegung des Druckbalkens 16 stillgesetzt wird und zwar innerhalb der zeitlich festgesetzten Toleranzgrenze.

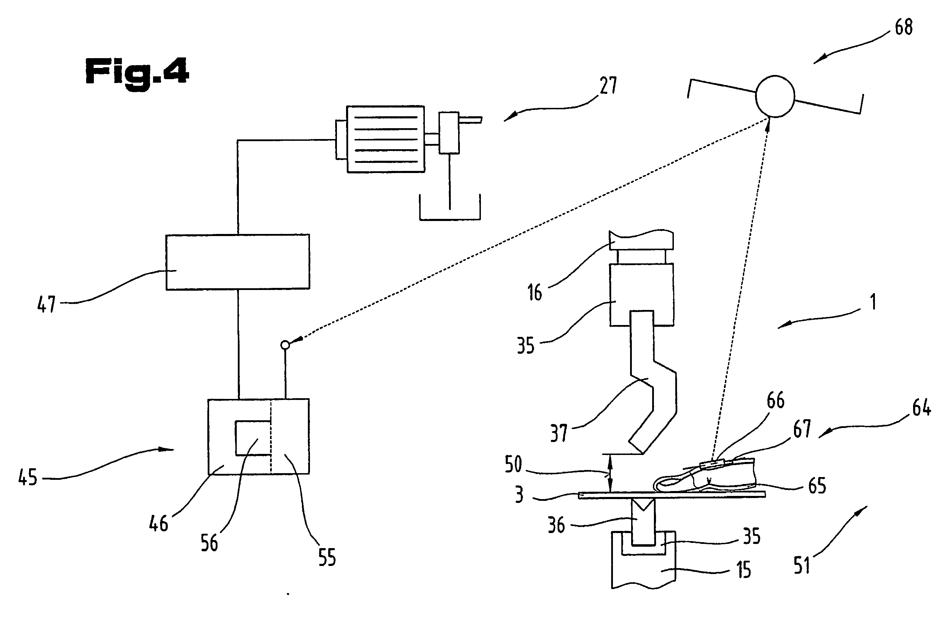

In der Fig. 4 ist eine weitere Ausführung der Fertigungseinrichtung 1 mit einer Sicherheits-Sicherheitssteuereinrichtung 45 gezeigt. Nach dieser Ausführung wird der Arbeitsbereich zwischen den Biegewerkzeugen 36, 37, sowie eine in Richtung der Bedienperson 51 zugeordneter Sicherheitsbereich durch Ermittlung der Position, z.B. beider Hände 64, der Bedienperson 51 überwacht, wobei die Erfassungsvorrichtung 46 die Position der Hände 64 durch Satelliten-Navigation feststeht. Dazu sind z.B. Arbeitshandschuhe 65 mit einem Peilsender 66 versehen, wodurch die laufende Position der Peilsender 66 im Analyse-Steuermodul 55 der Erfassungsvorrichtung 46 als Ist-Datenmustersatz anliegt und mit einem vorgegebenen und im Datenspeicher 56 hinterlegten Soll-Datenmustersatz, der z.B. Positionen des gesamten Arbeits- und Sicherheitsbereiches umfaßt, verglichen werden. Wird über das Navigationssystem eine Position des Peilsenders 66 erkannt, die innerhalb des Arbeits- und Sicherheitsbereiches liegt, erfolgt ein sofortiger Not-Stop der Fertigungseinrichtung 1. Zur Vermeidung, daß derartige mit Peilsender 66 bestückte Arbeitshandschuhe 65 abgelegt werden, d.h. eben nicht für die vorgesehene Verwendung im Einsatz stehen, kann der Peilsender 66 zusätzlich mit einem Temperatursensor 67 versehen sein, wobei die ermittelten Temperaturdaten des Temperatursensors 67 z.B. über Funksignale ebenfalls der Erfassungsvorrichtung 46 übermittelt werden und damit sichergestellt werden kann, daß ein Betrieb der Fertigungseinrichtung 1 nur bei ordnungsgemäßer Verwendung, d.h. nur dann, wenn vom Temperatursensor 67 in etwa eine Temperatur die der Körpertemperatur entspricht, an die Erfassungsvorrichtung 46 signalisiert wird. Ein derartiges Satelliten-Positionsüberwachungssystem 68 bietet damit wirksamen Schutz vor einem unzulässigen und gewerblichen Handhaben des Werkteils 3 bei der Umformung in einer derartigen Fertigungseinrichtung 1.

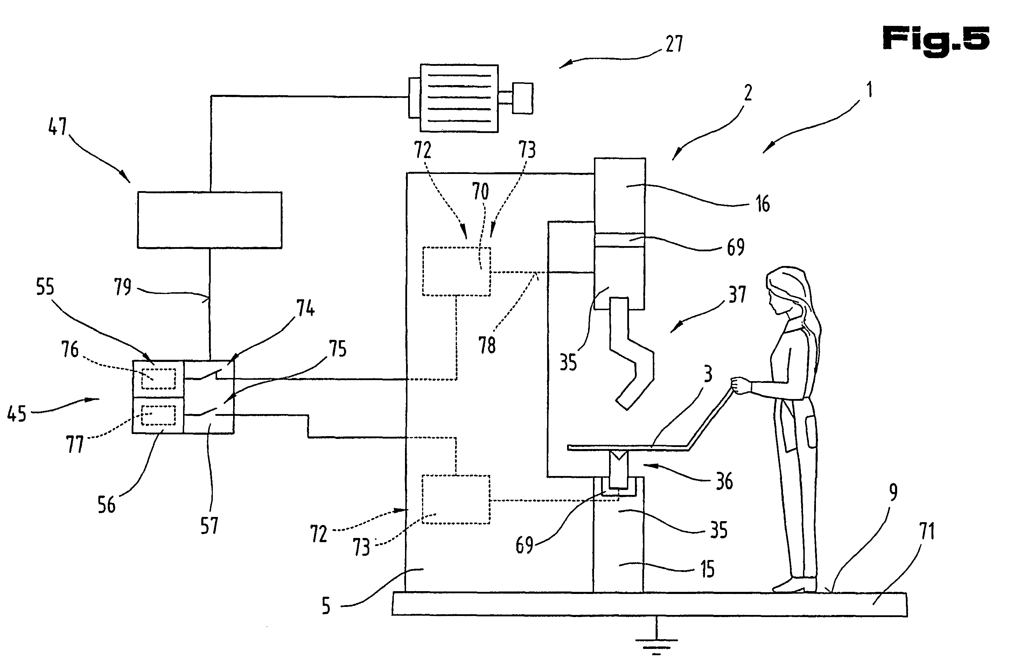

In der Fig. 5 ist nun eine andere Ausführung der Sicherheitssteuereinrichtung 45 gezeigt. Hierbei beruht die Sicherheitssteuereinrichtung 45 auf einer Überprüfung von elektrischen oder elektromagnetischen Kennwerten hinsichtlich Unregelmäßigkeiten im Arbeits- bzw. Werkzeugbereich der Fertigungseinrichtung 1 bzw. der Abkantpresse 2. Dabei sind einzelne Maschinenkomponenten, insbesondere wenigstens ein Biegewerkzeug 36, 37 oder wenigstens eine der Werkzeugaufnahmevorrichtungen 35 für die Biegewerkzeuge 36, 37, via elektrische Isolationsmittel 69, beispielsweise in Form von Isolationslagen, von den sonstigen Bereichen bzw. Komponenten der Fertigungseinrichtung 1 elektrisch isoliert. Diese Isolationsmittel 69 können, beispielsweise durch elektrisch nicht oder sehr schlecht leitende Lagen bzw. Zwischenelemente aus hochbelastbarem, insbesondere druckfesten Materialien, gebildet sein. Derartige Materialien für die bevorzugt schicht- bzw. folienartigen Isolationsmittel 69 zwischen den Biegewerkzeugen 36, 37 oder deren Aufnahmen und den sonstigen Maschinenteilen der Abkantpresse 2 können beispielsweise durch bruchfesten Kunststoff, Glimmer, Pertinax, Isolationslack oder durch sonstige aus dem Stand der Technik bekannte, bei hoher Druckfestigkeit zugleich hohe elektrische Isolationswerte aufweisende Materialien gebildet sein.

Im dargestellten Ausführungsbeispiel sind die Biegewerkzeuge 36, 37 bzw. die die Biegewerkzeuge 36, 37 halternden Werkzeugaufnahmevorrichtungen 35, mittels dem Isolationsmittel 69 gegenüber dem Pressenbalken 15, 16, elektrisch isoliert ausgebildet. Selbstverständlich ist es aber auch möglich, die Isolationsmittel 69 zwischen wenigstens einem der Biegewerkzeuge 36, 37 und der diese halternden bzw. aufnehmenden Werkzeugaufnahmevorrichtung 35 vorzusehen.

Wesentlich ist, daß die Isolationsmittel 69 möglichst nahe den Arbeits- bzw. Biegewerkzeugen 36, 37 zugeordnet sind, damit die Gefahr, daß elektrische Spannung in sicherheitskritischer Höhe an den Biegewerkzeugen 36, 37 anliegen könnte, minimiert ist. Hinsichtlich der Druckfestigkeit bzw. Formbeständigkeit der Isolationsmittel 69 kann es sich als günstig erweisen, diese zwischen wenigstens einer der Werkzeugaufnahmevorrichtungen 35 und dem jeweils zugeordneten Pressenbalken 15, 16 auszubilden. Aufgrund der größeren Flächenaufteilung der Druckkraft wird nämlich auch bei hohen Arbeitsdrücken eine hohe Maßhaltigkeit sichergestellt.

Mit dem elektrischen Isolationsmittel 69 wird also eine sogenannte Vollisolation zumindest der Biegewerkzeuge 36, 37 von den übrigen Rahmen- bzw. Maschinenteilen der Fertigungseinrichtung 1 bzw. der Abkantpresse 2 erzielt. Die Anordnung bzw. Plazierung der Isolationsmittel 69 ist dabei so gewählt, daß es im Regelfall nicht möglich ist, daß ein Phasenleiter zur Versorgung der elektrischen Komponenten der Fertigungseinrichtung 1 an den Biegewerkzeugen 36, 37 bzw. an deren Werkzeugaufnahmevorrichtungen 35 zur Anlage kommen könnte. Sicherheitsrisiken für Benutzer bzw. Bediener der Abkantpresse 2 hinsichtlich elektrischer Stromschläge können somit ausgeschlossen werden. Derartige Vollisolationen von an sich elektrisch leitenden Komponenten sind beispielsweise auch bei elektrischen Handwerkzeugen, wie z.B. Bohrmaschinen, gegeben.

Die von den sonstigen Teilen bzw. Komponenten der Fertigungseinrichtung 1 quasi elektrisch entkoppelten Biegewerkzeuge 36, 37 bzw. Werkzeugaufnahmevorrichtungen 35 sind dabei von wenigstens einer elektrischen Energiequelle 70, mit elektrischer Energie, insbesondere mit sogenannter Sicherheitskleinspannung, beaufschlagt. Diese Sicherheitskleinspannung kann dabei bis in etwa 48 V, bevorzugt in etwa 24 V, betragen. Die Höbe dieser elektrischen Spannung der Energiequelle 70 ist jedenfalls derart gewählt, daß eine Gesundheitsgefährdung bzw. ein Sicherheitsrisiko für den Benutzer bzw. Bediener der Fertigungseinrichtung 1 ausgeschlossen ist. Bevorzugt beaufschlagt die Energiequelle 70 das bewegliche Biegewerkzeug 37 mit einem Pol der jeweiligen elektrischen Energie. Diese Energieversorgung bzw. diese elektrische Potential wird von der Sicherheitssteuereinrichtung 45 auf Unregelmäßigkeiten bzw. auf atypische Zustände hin überprüft. Die Sicherheitssteuereinrichtung 45 kontrolliert dabei, ob sich die elektrischen Kennwerte der Energiequelle 70 außerhalb eines zulässigen Toleranzbereiches bewegen. In diesem Fall wird dann eine Sicherheits- bzw. Notabschaltung oder ein Notauf-Betrieb der Fertigungseinrichtung 1 eingeleitet. Zur Erfassung sicherheitskritischer Berührungen von gefahrbringenden Maschinenteilen, insbesondere der Biegewerkzeuge 36, 37, durch die Bedienperson 51, kann von der Sicherheitssteuereinrichtung 45 einerseits eine Änderung des Stromflusses und/oder eine Änderung der Spannungsverhältnisse der Energiequelle 70 über bewacht werden. Berührt nämlich die Bedienperson 51 der Fertigungseinrichtung 1 in sicherheitskritischer Weise während eines aktiven Produktionszyklus bzw. Biegevorganges das Biegewerkzeug 36 oder 37 bzw. die Werkzeugaufnahmevorrichtung 35, so verändern sich die elektrischen Eigenschaften der Energiequelle 70, nachdem über den Körper der Bedienperson 51 elektrischer Strom zur Aufstandsfläche 9 geleitet wird, welche Erdpotential aufweist. Insbesondere wird bei Berührung der mit Sicherheitskleinspannung beaufschlagten Teile der Fertigungseinrichtung über den Körper des Bedieners ein Stromfluß gegenüber Erde bzw. Masse verursacht. Bei Detektierung eines derartigen Stromflusses bzw. bei Einbruch der Spannung an der Energiequelle 70 versetzt die Sicherheitssteuereinrichtung 45 die Steuereinrichtung 47 bzw. wenigstens eine der Antriebsanordnungen 27 der Fertigungseinrichtung 1 in einen Sicherheits- bzw. Abschaltzustand. Verletzungen bzw. Gefährdungen des Bedieners der Fertigungseinrichtung 1 werden somit vermieden.

Zur Verbesserung des Ableitungsverhaltens der elektrischen Energie von der Energiequelle 70 gegenüber dem Erdpotential kann die Aufstandsfläche 9 für den Bediener und/oder die Fertigungseinrichtung 1 auch durch einen elektrisch leitenden Bodenbelag 71 gebildet sein. Dieser elektrisch leitende Bodenbelag 71 kann dabei durch elektrisch leitende Matten gebildet sein, die auch zur Schonung der Gesundheit, insbesondere der Gliedmaßen des Bedieners beitragen können. Ein Vorteil einer elektrisch gut leitenden Aufstandsfläche 9 bzw. eines Bodenbelages 71 gegenüber dem Erdpotential liegt darin, daß eine markantere bzw. deutlichere Veränderung der elektrischen Kennwerte, insbesondere des Stromflusses oder der Spannung der elektrischen Energiequelle 65, bedingt ist, sobald der Bediener sicherheitskritische Maschinenteile während ihrer Verstellbewegung berührt. Dadurch kann also die Erfassungszuverlässigkeit der Sicherheitssteuereinrichtung 45 erhöht werden.

Die Energiequelle 70 als Teilkomponente der Sicherheitssteuereinrichtung 45, insbesondere deren gegenüber dem Erdpotential erhöhtes Ausgangspotential, kann dabei mit mehreren abzusichernden Komponenten, insbesondere mit dem unteren Biegewerkzeug 36 und auch mit dem oberen Biegewerkzeug 37, elektrisch leitend verbunden sein. Alternativ ist es aber auch möglich, jedem zu überwachenden Teil bzw. Biegewerkzeug 36, 37 jeweils eine eigene Sicherheitssteuereinrichtung 45 bzw. jeweils eine eigene Energiequelle 70 zuzuordnen. Dadurch kann eine individuelle Sicherheitsabschaltung erfolgen, da beispielsweise bei Erfassung einer Berührung des unteren Biegewerkzeuges 36 durch den Bediener andere Sicherheitsmaßnahmen bzw. Vorkehrungen getroffen werden können, als bei einer Berührung des oberen bzw. des üblicherweise beweglichen Biegewerkzeuges 37.

Die Sicherheitssteuereinrichtung 45 mit der Energiequelle 70 bildet quasi eine Fehlerstromerfassungsvorrichtung für eine Sicherheitskleinspannung. Die Sicherheitssteuereinrichtung 45 stellt dabei aber eine Vorrichtung zur Sicherheitsabschaltung der Fertigungseinrichtung 1 zur Vermeidung von Verletzungen bzw. Quetschungen von Körperteilen, insbesondere der Finger oder Hände, des Bedieners dar.

Anstelle der Überwachung elektrischer Strom- oder Spannungsänderungen mittels der Sicherheitssteuereinrichtung 45 ist es selbstverständlich auch möglich, andere elektrische Kennwerte zur Sicherheitsabschaltung der Fertigungseinrichtung 1 heranzuziehen. Derartige Kennwerte können, beispielsweise durch Frequenzänderungen in einem elektrischen Signal, durch atypische Veränderungen in einem elektrischen Feld, infolge von Kapazitätsänderungen oder durch ungewöhnliche Veränderungen der elektromagnetischen Induktivität, definiert sein. Bevorzugt ist ein oberer und/oder unterer Grenzwert oder ein Toleranzbereich für eine Veränderung des jeweiligen elektrischen Kennwertes in der Sicherheitssteuereinrichtung 45 implementiert. Bei einem Unter- bzw. Überschreiten des vordefinierten Grenz- bzw. Schwellwertes, bzw. bei einem Verlassen des vorgegebenen Toleranzbereiches, wird dann von der Sicherheitssteuereinrichtung 45 entweder ein entsprechender Schaltbefehl bzw. ein Steuersignal an die Steuereinrichtung 47 weitergeleitet, oder direkt von der Sicherheitssteuereinrichtung 45 die jeweilige Sicherheitsmaßnahme an der Fertigungseinrichtung 1 eingeleitet. Von der Energiequelle 70 liegt lediglich ein Potential der jeweiligen elektrischen Spannung, beispielsweise das positive Potential, am jeweiligen sicherheitskritischen Teil, beispielsweise an zumindest einem der Biegewerkzeuge 36, 37, vor. Insbesondere entsteht dadurch eine elektrische Potentialdifferenz von der Energiequelle 70 bzw. vom abzusichernden Maschinenteil gegenüber der Aufstandsfläche 9 bzw. gegenüber dem Erdpotential.

Die Energiequelle 70 kann für den Fall einfacher Strom- bzw. Spannungsmessungen durch einen Transformator oder ein Netzteil mit Niederspannungsausgang oder durch eine einfache Batterie gebildet werden. Bevorzugt ist die Energiequelle 70 kurzschlußfest bzw. überlastsicher oder strombegrenzt ausgebildet. Insbesondere bei der Erfassung komplexerer elektrischer Kennwerte, wie z.B. von Frequenzänderungen, Induktivitätsänderungen oder Kapazitätsänderungen kann die Sicherheitssteuereinrichtung 45 auch eine Oszillatorschaltung 72 oder einen elektrischen Schwingkreis 73 umfassen, dessen elektrisches Betriebsverhalten bei Berührung der sicherheitskritischen Teile durch den Bediener beeinflußt bzw. verändert wird.

Sobald die Sicherheitssteuereinrichtung 45 eine als kritisch erkannte Veränderung des jeweiligen elektrischen Kennwertes detektiert, wird das Schaltmittel 57 aktiviert bzw. betätigt. Dieses Schaltmittel 57 kann dabei durch einen Öffnerkontakt 74 und/oder einen Schließerkontakt 75 gebildet sein.

Die Sicherheitssteuereinrichtung 45 bzw. der Analyse-Steuermodul 55 kann dabei einen softwaregesteuerten Mikrorechner 76 umfassen, welcher mit dem Datenspeicher 56, insbesondere mit einem Halbleiterspeicher 77, verbunden ist. Beim Einsatz softwaregesteuerter Mikrorechner 76 für die Sicherheitssteuereinrichtung 45 ist vorteilhaft, daß auch komplexe Überwachungsverfahren realisiert werden können und somit die Erfassungszuverlässigkeit einer sicherheitskritischen Berührung der Fertigungseinrichtung 1 bzw. des Werkteils 3 gesteigert werden kann. Insbesondere ist mit einem derartigen Mikrorechner 76 auch eine einfache Festlegung bzw. eine nachfolgende Anpassung unterer bzw. oberer Grenzwerte für eine Sicherheitsabschaltung bzw. für eine Einleitung eines Notauf-Betriebes der Abkantpresse 2 ermöglicht. Mit diesem Mikrorechner 76 der Sicherheitssteuereinrichtung 45 können nämlich in einem Lern-Modus Kennlinien bzw. Kennwerte für einen typischen Signalverlaufes während eines ordnungsgemäßen Betriebes aufgezeichnet und zumindest teilweise im Datenspeicher 56 hinterlegt werden. Werden nachfolgend im Echt- bzw. Arbeitsbetrieb der Fertigungseinrichtung 1 von der Sicherheitssteuereinrichtung 45 unzulässig hohe Abweichungen vom aufgenommenen Soll- bzw. Referenz-Signalverlauf der festgestellt bzw. wird ein definierter Toleranzbereich überschritten, kann sofort die jeweilige Notmaßnahme, beispielsweise ein Notauf-Betrieb des Biegewerkzeuges 37 eingeleitet werden. Mittels einem derartigen Mikrorechner 76 für die Sicherheitssteuereinrichtung 45 können jederzeit auch Anpassungen der Grenzwerte bzw. des Toleranzbereiches vorgenommen werden. Dies kann insbesondere auch dann notwendig sein, wenn die Maschine bzw. die Fertigungseinrichtung 1 umgerüstet wird oder andere Werkteile 3 bearbeitet werden müssen. In diesem Fall kann ein neuer Lernmodus gestartet werden und können die jeweils neuen Signalverläufe aufgezeichnet und für nachfolgende Vergleichsoperationen im Datenspeicher 56 bzw. im Halbleiterspeicher 77 hinterlegt werden.

Die Energiequellen 70 sind entweder direkt mit dem jeweiligen, sicherheitskritischen Organ der Abkantpresse 2 kontaktiert oder über eine Leitung 78 mit dem jeweiligen Element, im Besonderen mit dem Biegewerkzeug 36 oder 37 bzw. mit den Werkzeugaufnahmevorrichtungen 35 elektrisch leitend verbunden.

Selbstverständlich kann die Sicherheitssteuereinrichtung 45 auch in die eigentliche Steuereinrichtung 47 für die elektrischen Komponenten der Fertigungseinrichtung 1 integriert sein oder aber auch, wie schematisch dargestellt, über wenigstens eine Leitung 79 mit der Steuereinrichtung 47 verbunden sein. Unabhängig davon können die zeichnerisch extern angeordneten, elektrischen Komponenten selbstverständlich eine Baueinheit mit der Fertigungseinrichtung 1 bilden.

Die Sicherheitssteuereinrichtung 45 soll dabei zumindest solange aktiviert sein, bis ein Spalt bzw. Freiraum zwischen dem Biegewerkzeug 37 und dem Werkteil 3 bzw. dem Biegewerkzeug 36 derart klein ist, daß eine Quetschung von Körperteilen der Bedienperson der Fertigungseinrichtung 1 nahezu unmöglich ist.

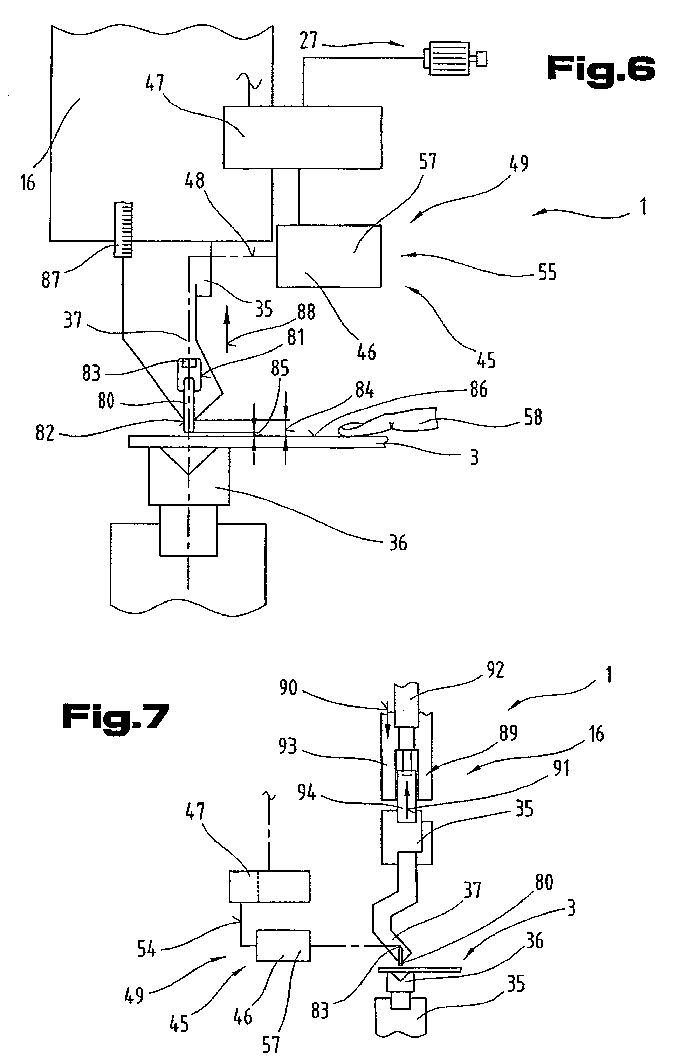

In der Fig. 6 ist eine weitere Ausführung der Sicherheitssteuereinrichtung 45 gezeigt. Das Erfassungsmittel 49 ist in diesem Ausführungsbeispiel eine im Biegewerkzeug 37 integriert angeordnete Kontaktleiste 80, die in Bewegungsrichtung des Pressenbalkens 16 verstellbar in einer schlitzförmigen Aufnahmekammer 81 gelagert ist und eine Werkzeugspitze 82 in Richtung des weiteren Biegewerkzeuges 36 geringfügig überragt. Die Lage der Kontaktleiste 80 bei der diese die Werkzeugspitze 82 überragt, z.B. über zumindest einem in der Aufnahmekammer 76 angeordneten Näherungssensor 83, der mit der Sicherheitssteuereinrichtung 45 leitungsverbunden ist. Anhand der Fig. 6 wird im Detail die Funktionsweise zur Sicherheitsabschaltung der Fertigungseinrichtungl beschrieben. Nach Einleitung eines Arbeitshubes zur Umformung des Werkteils 3 wird das Biegewerkzeug 37 in Richtung des Biegewerkzeuges 36 bewegt, wobei die Kontaktleiste 80 um eine Distanz 84 die Werkzeugspitze 82 überragt. Die Sicherheitssteuereinrichtung 45 ist bis zur Erreichung eines Abstandes 85 zwischen einer Oberfläche 86 des Werkteils 3 und der Kontaktleiste 80 aktiviert, wobei der Abstand 85 nach Sicherheitsrichtlinien in einer Größenordnung festgelegt ist, die in etwa 6 mm beträgt womit sichergestellt sein soll, daß nach Erreichen dieses Abstandes 85, kein Körperteil 58, z.B. Finger, im Arbeitsbereich ist. Nach Erreichung dieses Abstandes 85 der über eine Positionsmeßeinrichtung 87 überwacht wird und im Datenspeicher 56 im Soll-Datenmustersatz hinterlegt ist, kommt es zu einer Deaktivierung der Notabschaltfunktion, womit die Umformung des Werkteils 3 bei Arbeitsgeschwindigkeit erfolgt.

Wird jedoch vor dem Erreichen des festgelegten Abstandes 85 die Aufnahmekammer 81 in Richtung des Näherungssensors 83 bewegt, gemäß - Pfeil 88 -, erfolgt eine entsprechende Signalgebung über die Leitung 48 an die Erfassungsvorrichtung 46 und Verarbeitung des Signals in der Sicherheitssteuereinrichtung 45 und über das Schaltmittel 57 und der mit diesem leitungsverbundenen Steuereinrichtung 47 die Notabschaltung der Antriebsanordnung 27 und damit die Stillsetzung der Fertigungseinrichtung 1. Eine derartige Notabschaltung wird, wie bereits vorhergehend beschrieben, bei den derzeit gefahrenen Geschwindigkeiten von ca. 200 mm/s im Bereich von 5 µs durchgeführt, damit bei einem zu berücksichtigten Nachlaufweg des Pressenbalkens 16 der zurückgelegte Weg kleiner ist als eine Wegstrecke bei der Verletzungen auftreten könnten und der als maximal zulässiger Verformungsweg, definierbar ist.

Selbstverständlich eignen sich eine Reihe weiterer aus der Sensorik bekannter Mittel zur Ermittlung der Lageänderung der Kontaktleiste 80, z.B. ist es möglich, an Stelle des Näherungssensors 83 einen Drucksensor einzusetzen oder die Kontaktleiste 80 und das Biegewerkzeug 37 mit elektronischen Bauteilen zu versehen, mit denen eine Relativbewegung der Kontaktleiste 80 in der Aufnahmekammer 81 ermittelt werden kann.

Weiters ist es auch möglich, anstelle der unmittelbaren Stillsetzung, d.h. Notabschaltung, eine Umsteuerbewegung des Pressenbalkens 16 vorzusehen, d.h. diesen bei Eintreten des entsprechenden Schaltzustandes umzusteuern, also einen Rückhub einzuleiten.

In der Fig. 7 ist eine andere Ausführung der Fertigungseinrichtung 1 mit der Sicherheitseinrichtung 45 zur Absicherung des Arbeitsbereiches und Vermeidung von Unfällen gezeigt. Bei dieser Ausführung ist die Werkzeugaufnahmevorrichtung 35 mit dem Biegewerkzeug 37 des verstellbaren Pressenbalkens 16 gegenüber diesem, mittels einer Verstelleinrichtung 89 in Richtung der Verstellbarkeit des Pressenbalkens 16, verstellbar gelagert. Die Verstelleinrichtung 89 ist ausgelegt zur Übertragung der, für die Umformung des Werkteiles 3, aufzuwendenden Pressenkraft und wird zur Vornahme einer Relativbewegung zwischen der Werkzeugaufnahme 35 und dem Pressenbalken 16 von der Erfassungsvorrichtung 46 bzw. Steuereinrichtung 47 aktiviert, wenn vom Erfassungsmittel 49 - im gezeigten Ausführungsbeispiel der Kontaktleiste 80 bzw. dem Näherungssensor 83 Unregelmäßigkeiten im Arbeitsbereich detektiert werden - wie dies bereits in der vorhergehenden Fig. 6 beschrieben ist.

Sobald die Kontaktleiste 80 vor dem Erreichen des Abstandes 85 durch z.B. Auftreffen auf ein Fremdobjekt, z.B. einen Körperteil 58, insbesondere einen Finger, in der Aufnahmekammer 81 in Richtung des Näherungssensors 83 bewegt wird, wird der Schaltzustand des Schaltmittels 57 umgestellt und ein Not-Stop eingeleitet. Gleichzeitig erfolgt die Ansteuerung der Verstelleinrichtung 89 zur Einleitung der Relativbewegung zwischen der Werkzeugaufnahmevorrichtung 35 und dem Pressenbalken 16. Dabei wird die Werkzeugaufnahmevorrichtung 35 mit dem Biegewerkzeug 37 in zur Arbeitsrichtung, gemäß - Pfeil 90 - entgegengesetzter Richtung - gemäß Pfeil 91 - verstellt. Dies ermöglicht einen Ausgleich des, aufgrund der großen Masse des Pressenbalkens 16 bei einem Not-Stop, nicht zu verhindernden Nachlaufweges. Durch Vornahme der Verstellung der Werkzeugaufnahmevorrichtung 35 wird dieser Nachlaufweg kompensiert und kann die Sicherheitsanforderung eingehalten werden, daß der Abstand 80 um nicht mehr als festgelegter zulässiger Weg, im Falle eines Not-Stops, unterschritten wird, der als zulässiger Verformungsweg eines Körperteils 58, insbesondere des Fingers, ohne bleibende Schäden zu verursachen, als zulässig angesehen werden kann.

Für die Verstelleinrichtung 89 sind eine Reihe technischer Vorrichtungen, z.B. Verstellexzenter, Kniehebelanordnungen, Verstellzylinder 92, Verstellspindeln etc. möglich, auf die im Detail nicht weiter eingegangen werden muß.

Selbstverständlich ist eine wie vorhergehend beschriebene Lösung auch bei einem quergeteilten Pressenbalken 16 möglich der teleskopierbar ausgebildet ist und zwischen Teilen 93, 94 des Pressenbalkens 16 die Verstelleinrichtung 89 angeordnet ist.

Der Ordnung halber sei abschließend darauf hingewiesen, daß zum besseren Verständnis des Aulbaus der Fertigungseinrichtung diese bzw. deren Bestandteile teilweise unmaßstäblich und/oder vergrößert und/oder verkleinert dargestellt wurden.

### Bezugszeichenaufstellung

- 1: Fertigungseinrichtung
- 2: Abkantpresse
- 3: Werkteil
- 4: Gehäuseteil
- 5: Maschinengestell

- 6: Ständer-Seitenwange
- 7: Ständer-Seitenwange
- 8: Dämpfungselement
- 9: Aufstandsfläche
- 10: Bodenplatte

- 11: Abstand
- 12: Mittel
- 13: Wandteil
- 14: Arbeitsebene
- 15: Pressenbalken

- 16: Pressenbalken
- 17: Länge
- 18 19: Befestigungsanordnung
- 20: Stirnfläche

- 21: Schenkel
- 22: Seitenfläche
- 23: Seitenfläche
- 24: Schenkel
- 25: Stellantrieb

- 26: Stellantrieb
- 27: Antriebsanordnung
- 28: Hydraulikzylinder
- 29: Stellelement
- 30: Führungsanordnung

- 31: Gelenklager
- 32: Bolzen
- 33: Stirnfläche
- 34: Stirnfläche
- 35: Werkzeugaufnahmevorrichtung

- 36: Biegewerkzeug
- 37: Biegewerkzeug
- 38: Matrize
- 39: Biegegesenk
- 40: Patrize

- 41: Biegestempel
- 42: Werkzeuglänge
- 43: Stützfläche
- 44: Pfeil
- 45: Sicherheitssteuereinrichtung

- 46: Erfassungsvorrichtung
- 47: Steuereinrichtung
- 48: Leitung
- 49: Erfassungsmittel
- 50: Sicherheitsabstand

- 51: Bedienperson
- 52: Sende- und Empfangsvorrichtung
- 53: Wellenfeld
- 54: Leitung
- 55: Analyse-Steuermodul

- 56: Datenspeicher
- 57: Schaltmittel
- 58: Körperteil
- 59: Zweihand-Schaltmittel
- 60: Fußschalter

- 61: Kamera
- 62: Leitung
- 63: Bildverarbeitungseinrichtung
- 64: Hand
- 65: Arbeitshandschuh

- 66: Peilsender
- 67: Temperatursensor
- 68: Satelliten-Positionsüberwachungssystem
- 69: Isolationsmittel
- 70: Energiequelle

- 71: Bodenbelag
- 72: Oszillatorschaltung
- 73: Schwingkreis
- 74: Öffnerkontakt
- 75: Schließerkontakt

- 76: Mikrorechner
- 77: Halbleiterspeicher
- 78: Leitung
- 79: Leitung
- 80: Kontaktleiste

- 81: Aufnahmekammer
- 82: Werkzeugspitze
- S3: Näherungssensor
- 84: Distanz
- 85: Abstand

- 86: Oberfläche
- 87: Positionsmeßeinrichtung
- 88: Pfeil
- 89: Verstelleinrichtung
- 90: Pfeil

- 91: Pfeil
- 92: Verstellzylinder
- 93: Teil
- 94: Teil

## Patentansprüche

1. Fertigungseinrichtung, insbesondere Abkantpresse für die Umformung von Werkteilen aus Blech zwischen zwei mit Biegewerkzeugen bestückten, relativ zueinander, mittels einer Antriebsvorrichtung, verstellbarer Pressenbalken und mit einer Steuereinrichtung, die Steuereinrichtung (47) eine Erfassungsvorrichtung (46) umfaßt und zumindest ein Erfassungsmittel (49) vorgesehen ist, welches mit der Erfassungsvorrichtung (46) zur Datenund/oder Signalübertragung kommunikationsverbunden ist, **dadurch gekennzeichnet, daß** das Erfassungsmittel (49) durch eine in einer Aufnahmekammer (81) des Biegewerkzeuges (37) angeordnete, eine Werkzeugspitze (82) in Richtung eines weiteren Biegewerkzeuges (36) geringfügig überragende Kontaktleiste (80) gebildet ist, die in der Aufnahmekammer (81) in Bewegungsrichtung des Pressenbalkens (16) verstellbar gelagert ist.

2. Fertigungseinrichtung nach Anspruch 1, **dadurch gekennzeichnet, daß** in der Erfassungsvorrichtung (46) ein Analyse-Steuermodul (55) angeordnet ist.

3. Fertigungseinrichtung nach Anspruch 1 oder 2, **dadurch gekennzeichnet, daß** das Analyse-Steuermodul (55) mit einem Datenspeicher (56), insbesondere einem Halbleiterspeicher (77), leitungsverbunden ist.

4. Fertigungseinrichtung nach Anspruch 1, **dadurch gekennzeichnet, daß** in derAufnahmekammer (81) des Biegewerkzeuges (37) ein von der Kontaktleiste (80) betätigbarer Schaltkontakt angeordnet ist.

5. Fertigungseinrichtung nach Anspruch 1, **dadurch gekennzeichnet, daß** in der Aufnahmekammer (81) des Biegewerkzeuges (37) ein Näherungssensor (83) angeordnet ist.

6. Fertigungseinrichtung nach einem oder mehreren der Ansprüche 1 bis 5, **dadurch gekennzeichnet, daß** die Werkzeugaufnahmevorrichtung (35) im Pressenbalken (16) verstellbar gelagert ist.

7. Fertigungseinrichtung nach einem oder mehreren der Ansprüche 1 bis 6, **dadurch gekennzeichnet, daß** zwischen der Werkzeugaufnahmevorrichtung (35) und dem Pressenbalken (16) eine Verstelleinrichtung (89) angeordnet ist.

8. Fertigungseinrichtung nach einem oder mehreren der Ansprüche 1 bis 7, **dadurch gekennzeichnet, daß** die Verstelleinrichtung (89) durch einen Stellexzenter gebildet ist.

9. Fertigungseinrichtung nach einem oder mehreren der Ansprüche 1 bis 8, **dadurch gekennzeichnet, daß** die Verstelleinrichtung (89) durch eine Kniehebelanordnung gebildet ist.

10. Fertigungseinrichtung nach einem oder mehreren der Ansprüche 1 bis 9, **dadurch gekennzeichnet, daß** die Verstelleinrichtung (89) durch, mit einem Druckmedium beaufschlagten, Zylinder (92) gebildet ist.

11. Fertigungseinrichtung nach einem oder mehreren der vorhergehenden Ansprüche, **dadurch gekennzeichnet, daß** die Pressenbalken (15, 16), insbesondere der am Maschinengestell (5) verstellbar gelagerte Pressenbalken (16), hin zur Aufstandsfläche (9) parallel verlaufender Richtung geteilt ausgebildet ist.

12. Fertigungseinrichtung nach Anspruch 11 **dadurch gekennzeichnet, daß** Teile des geteilten Pressenbalkens (16) zueinander teleskopisch verstellbar angeordnet sind.

13. Fertigungseinrichtung nach einem oder mehreren der vorhergehenden Ansprüche, **dadurch gekennzeichnet, daß** zwischen dem verstellbaren Pressenbalken (16) und dem Maschinengestell (5) oder den Ständer-Seitenwangen (6, 7) eine Wegemeßeinrichtung angeordnet ist.

## Claims

1. Production unit, in particular a bending press for shaping workpieces of sheet metal between two press beams equipped with bending tools, with can be displaced relative to one another by means of a drive system, and incorporating a control unit, the control unit (47) having a detection system (46), and at least one detection means (49) is provided, which is connected so as to communicate with the detection system (46) in order to transmit data and/or signals, **characterised in that** the detection means (49) is provided in the form of a contact strip (80) disposed in a housing compartment (81) of the bending tool (37) projecting slightly beyond a tool tip (82) in the direction towards another bending tool (36), which is mounted in the housing compartment (81) so as to be displaceable in the direction of motion of the press beam (16).

2. Production unit as claimed in claim 1, **characterised in that** the detection system (46) has an analysis-control module (55).

3. Production unit as claimed in claim 1 or 2, **characterised in that** the analysis-control module (55) is conductively linked to a data memory (56), in particular to a semiconductor memory (77).

4. Production unit as claimed in claim 1, **characterised in that** a switch contact which can be operated by the contact strip (80) is disposed in the housing compartment (81) of the bending tool (37).

5. Production unit as claimed in claim 1, **characterised in that** a proximity sensor (83) is disposed in the housing compartment (81) of the bending tool (37).

6. Production unit as claimed in one or more of claims 1 to 5, **characterised in that** the tool holder device (35) is mounted in the press beam (16) so as to be displaceable.

7. Production unit as claimed in one or more of claims 1 to 6, **characterised in that** an adjusting mechanism (89) is disposed between the tool holder device (35) and the press beam (16).

8. Production unit as claimed in one or more of claims 1 to 7, **characterised in that** the adjusting mechanism (89) is an adjusting eccentric.

9. Production unit as claimed in one or more of claims 1 to 8, **characterised in that** the adjusting mechanism (89) is a knee-operated lever system.

10. Production unit as claimed in one or more of claims 1 to 9, **characterised in that** the adjusting mechanism (89) is a cylinder (92) to which a pressurising medium is applied.

11. Production unit as claimed in one or more of the preceding claims, **characterised in that** the press beams (15, 16), in particular the press beam (16) displaceably mounted on the machine frame (5), are split in the direction extending parallel with the floor (9).

12. Production unit as claimed in claim 11, **characterised in that** parts of the split press beam (16) are telescopically adjustable.

13. Production unit as claimed in one or more of the preceding claims, **characterised in that** a distance measuring device is disposed between the displaceable press beam (16) and the machine frame (5) or the stand-side panels (6, 7).

## Revendications

1. Dispositif de fabrication, en particulier presse plieuse pour la déformation de pièces en tôle entre deux sommiers de pression pourvus d'outils de pliage, déplaçables l'un relativement à l'autre au moyen d'un dispositif d'entraînement, et avec une installation de commande, l'installation de commande (47) comprend un dispositif de détection (46), et au moins un moyen de détection (49) est prévu qui est relié en communication au dispositif de détection (46) pour la transmission des données et/ou signaux, **caractérisé en ce que** le moyen de détection (49) est formé par une baguette de contact (80) disposée dans une enceinte de réception (81) de l'outil de pliage (37), faisant légèrement saillie sur une pointe d'outil (82) en direction d'un autre outil de pliage (36), qui est logée d'une manière déplaçable dans l'enceinte de réception (81) dans la direction de déplacement du sommier de pression (16).

2. Dispositif de fabrication selon la revendication 1, **caractérisé en ce qu'**un module d'analyse-commande (55) est disposé dans le dispositif de détection (46).

3. Dispositif de fabrication selon la revendication 1 ou 2, **caractérisé en ce que** le module d'analyse-commande (55) est relié par ligne à une mémoire de données (56), en particulier une mémoire à semi-conducteurs.

4. Dispositif de fabrication selon la revendication 1, **caractérisé en ce qu'**un contact de commutation actionnable par la baguette de contact (80) est disposé dans l'enceinte de réception (81) de l'outil de pliage (37).

5. Dispositif de fabrication selon la revendication 1, **caractérisé en ce qu'**un capteur de proximité (83) est disposé dans l'enceinte de réception (81) de l'outil de pliage (37).

6. Dispositif de fabrication selon l'une ou plusieurs des revendications 1 à 5, **caractérisé en ce que** le dispositif de réception d'outil (35) est logé d'une manière ajustable dans le sommier de pression (16).

7. Dispositif de fabrication selon l'une ou plusieurs des revendications 1 à 6, **caractérisé en ce qu'**une installation d'ajustage (89) est disposée entre le dispositif de réception d'outil (35) et le sommier de pression (16).

8. Dispositif de fabrication selon l'une ou plusieurs des revendications 1 à 7, **caractérisé en ce que** l'installation d'ajustage (89) est formée par un excentrique de positionnement.

9. Dispositif de fabrication selon l'une ou plusieurs des revendications 1 à 8, **caractérisé en ce que** l'installation d'ajustage (89) est formée par un agencement à levier coudé.

10. Dispositif de fabrication selon l'une ou plusieurs des revendications 1 à 9, **caractérisé en ce que** l'installation d'ajustage (89) est formée par un vérin (92) chargé par un milieu sous pression.

11. Dispositif de fabrication selon l'une ou plusieurs des revendications précédentes, **caractérisé en ce que** les sommiers de pression (15, 16), en particulier le sommier de pression (16) logé d'une manière ajustable au bâti de machine (5), est divisé dans la direction s'étendant parallèlement à la face d'appui (9).

12. Dispositif de fabrication selon la revendication 11, **caractérisé en ce que** des parties du sommier de pression divisé (16) sont ajustables télescopiquement l'une relativement à l'autre.

13. Dispositif de fabrication selon l'une ou plusieurs des revendications précédentes, **caractérisé en ce qu'**une installation de mesure de déplacement est disposée entre le sommier de pression ajustable (16) et le bâti de machine (5) ou les joues latérales (6, 7) du montant.
